# EUROPEAN PATENT SPECIFICATION

(11) **EP 4 018 754 B1**
(45) Date of publication and mention of the grant of the patent: **02.10.2024**
(21) Application number: 20739370.3
(22) Date of filing: 14.07.2020
(51) Int. Cl.: H04W 72/54, H04W 64/00

(54) **METHOD AND APPARATUS FOR REDUCING INTERFERENCE CAUSED TO POSITIONING SIGNALS IN A WIRELESS COMMUNICATION SYSTEM**
VERFAHREN UND VORRICHTUNG ZUR VERRINGERUNG DER INTERFERENZ FÜR POSITIONSSIGNALE IN EINEM DRAHTLOSKOMMUNIKATIONSSYSTEM
PROCÉDÉ ET APPAREIL POUR RÉDUIRE LES INTERFÉRENCES SUR DES SIGNAUX DE POSITIONNEMENT DANS UN SYSTÈME DE COMMUNICATION SANS FIL

(30) Priority: 19.08.2019 EP 19192399
(43) Date of publication of application: 29.06.2022
(73) Proprietor: Fraunhofer-Gesellschaft zur Förderung der angewandten Forschung e.V., 80686 München (DE)
(72) Inventor: GHIMIRE, Birendra, 91058 Erlangen (DE); ALAWIEH, Mohammad, 91058 Erlangen (DE)
(74) Representative: Groth & Co. KB
(86) International application number: PCT/EP2020/069853
(87) International publication number: WO 2021/032367

(56) References cited:
- WO-A1-2011/148211
- WO-A1-2012/075050
- ANDREW SOLUTIONS: "Uplink signals for LTE network based positioning", 3GPP DRAFT; R1-094485 UPLINK SIGNALLING FOR LTE NETWORK BASED UE POSITIONING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20091109 - 20091113, 2 November 2009 (2009-11-02), XP050597817

## Description

### TECHNICAL FIELD

The present disclosure relates to the field of wireless communications, and in particular to a method and an apparatus for reducing interference caused to positioning signals and/or caused by positioning signals in a wireless communication system.

### BACKGROUND

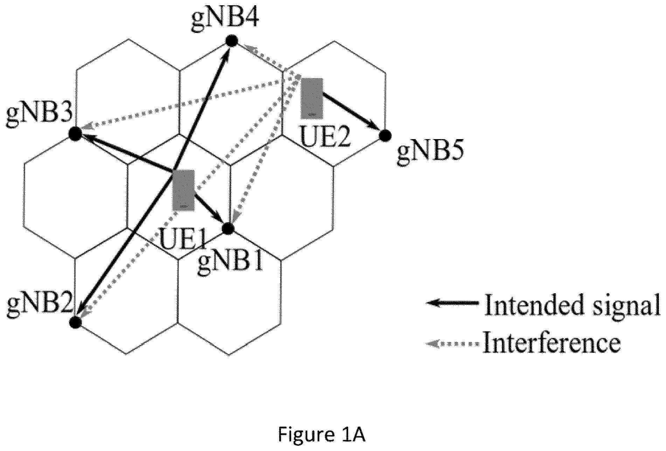

An uplink positioning reference signal transmitted by a User Equipment (UE), whose position is to be computed, should be received by more than one network entities e.g. transmission and reception points (TRP). The received signals are processed by a network entity known as a Transmission Measurement Function (TMF) to extract relevant transmission parameters, such as Time of Arrival (ToA), Angle of Arrival (AoA), Received Signal Strength (RSS) and so forth. The TRP may be standalone or integrated into one of the network nodes or gNBs in the network. As it can be seen in **Figure 1A****,** the distance between a UE and a TRP or gNB which is configured to receive the positioning signal could be larger than the distance between the aforesaid TRP or gNB and an interfering UE (served by a neighboring gNB). Therefore, the received positioning signal, at this TRP, could be much weaker than the interference caused by a UE served in an adjacent cell. In this situation, UE2 should preferably not be scheduled, to allow gNB4 to receive positioning signal without critical interference. The gNB (here gNB5) scheduling the interfering UE (here UE2) may avoid interference caused to the positioning signal received at gNB4, if the interference its UEs causes to gNB4 is known in advance. Figure 1A depicts the intended signal and the interference signal.

In the Long Term Evolution system (LTE) using Uplink Time Difference of Arrival (UTDOA), a network node or and eNodeB is configured to make its decision on the resources to be assigned and to communicate this configuration information back to a Enhanced Serving Mobile Location Center (E-SMLC) so that E-SMLC can configure one or more network entities known as Location Measurement Units (LMUs) (as described in section 8.5 of 3GPP TS-36.305 (Third Generation Partnership Project Technical Specification 36.305) [7]).

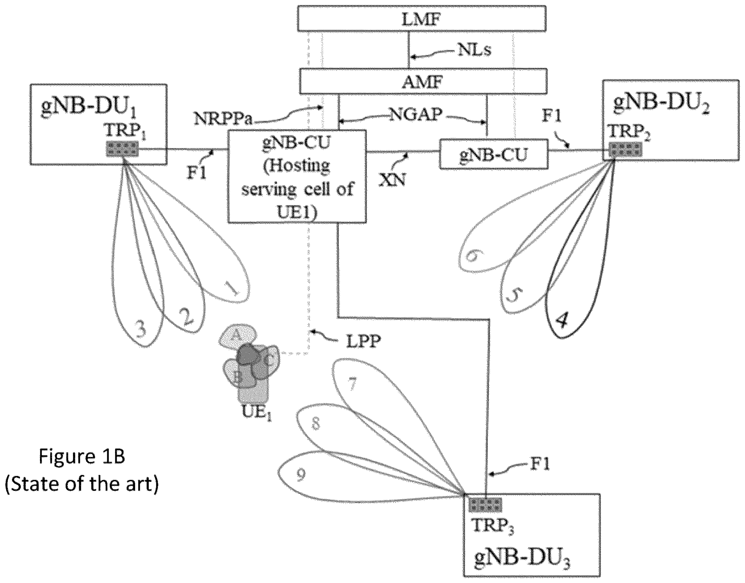

Referring to **Figure 1B****,** depicts entities, both physical and logical, involved in a wireless network application for executing positioning functionality also shown the interfaces involved in a 5G network such as NRPPa, NGPA, XN, LPP etc.

A UE (UE1) is RRC (Radio Resource Control) connected to its serving cell, which is hosted by a gNB. A gNB may host one or more TRPs. The TRPs hosting physical cells may be identified either by a Physical Cell ID (PCI) within the local area or using CGI (Cell Global ID) within a global scope. The TRPs that only transmit positioning signals may not have PCI associated with them, so they can be identified by associating them to the downlink reference signal they transmit. When PCI is used as an identifier to identify a TRP equivalent identifier, such as a combination of TRP-ID, CGI that help to identify a TRP, which only transmits downlink reference signal or a receive only TRP is also implied. A UE receives configuration either from its serving cell, by means of RRC signaling, or from the location server, also equivalently called location management function (LMF) by means of the LTE positioning protocol (LPP). Some of the network signaling could originate from the MAC and PHY layers of the gNB, and they are signaled to the UE using MAC CE and DCI respectively. Likewise, the UE reports measurement to the network either via the LPP protocol or using the RRC signaling. The location of network elements, such as TRPs, could be available, for example, in the operation and maintenance (O&M) database.

A 5G ( or NR) radio frame structure is divided into subframes and slots. There are 10 subframes per radio frame and the number of slots per subframe depends on the numerology used. Reference signals may be transmitted in uplink and/or downlink direction in some of the OFDM symbols in some of the slots. The same slot used for positioning in a cell may potentially be used for data transmission in a neighbouring cell.

There is currently no mechanism for coordinating allocation of uplink positioning signals resources such as Sounding Reference Signal (SRS) resources between eNodeBs (or equivalently for gNBs in a 5G Network). Therefore, the interference situation depicted in Figure 1A may arise. There are mechanisms for exchanging interference and load related signaling between two eNodeBs in the LTE system, by use of an Overload Indicator (OI) and a High Interference Indicator (HII). OI is defined in three coarse granularities high, low and medium at Physical resource Block (PRB) level. HII is defined as high and low again at the PRB level. Moreover, the transmission and reception of HII and OI are left implementation specific. Hence, the existing interference mechanisms are designed from the perspective of Physical Uplink Shared Channel (PUSCH) coordination and does not address the interference issues in positioning sufficiently.

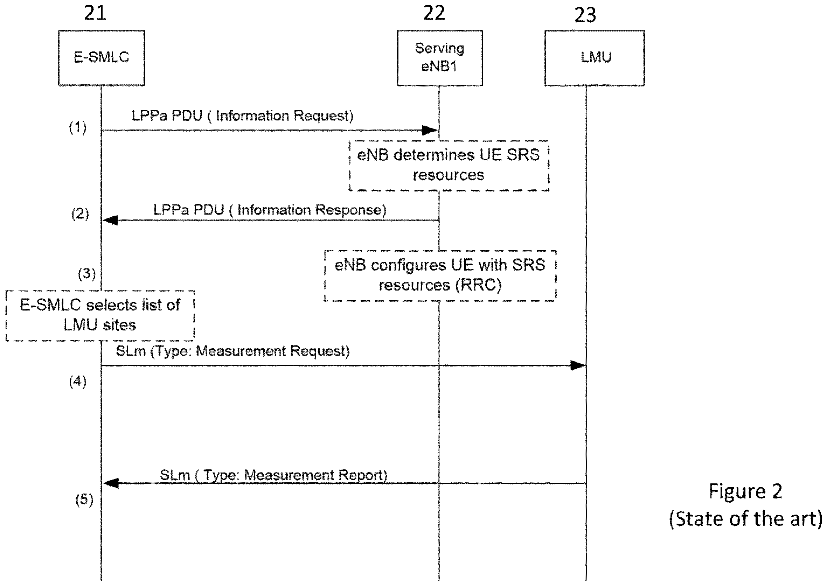

Regarding the current UTDOA procedure for allocating the positioning resources between the Location Server (E-SMLC) and the serving eNodeB for determining the SRS resources is shown in **Figure 2** and is disclosed in section 8.5 in 3GPP TS 36.305 [7].
1. The E-SMLC 21 sends an Information Request message indicating to the eNodeB (or eNB1) the need to invoke periodic SRS for target UE. The E-SMLC may provide eNB1 with a number of SRS transmissions. The Information Request is sent using LTE positioning protocol A Protocol Data Unit (LPPa PDU).
2. The eNodeB (or eNB1) 22 determines the resources to be allocated for the UE and sends an Information Response to the E-SMLC that includes the allocated resources and the associated parameters. The eNB1 may decide (e.g., in case no resources are available) to configure no resources for the UE and report the empty resource configuration to the E-SMLC.
3. If in step 2 the eNB1 22 determines that resources will be allocated, the eNB1 then allocates the resources to the target UE.
4. The E-SMLC 21 selects a set of LMUs 23 to be used for the UTDOA positioning and sends a measurement request with the SRS configuration to each one of them (via SLm which is the interface between the LMU and the E-SMLC).
5. LMUs 23 report back to E-SMLC 20 the uplink measurement reports.

As seen from Figure 2 and as disclosed above, in the UTDOA procedure in an LTE system, it is the serving eNodeB (or gNB) that allocates the resources for the uplink SRSs. This could cause interference at neighboring gNBs and degrade the quality of signal received at the neighboring gNBs. In addition, the UEs closer towards the serving gNB generally transmit with lower transmit power compared to the cell-edge users. This causes the transmission from the UEs closed to the serving gNB difficult to be received with good quality at the neighboring gNB(s). Further, as shown in described above, the E-SMLC retrieves the UE configuration from the serving eNodeB (or gNB) for positioning purposes. The retrieved information is used by the E-SMLC which commands selected LMUs to reporting measurement using the configuration provided by the E-SMLC and the search window configured by the E-SMLC.

A drawback with this approach is that interference issues arising from transmissions in the neighboring cells are not considered. The interference situation as the one depicted in Figure 1 arise when resources are not coordinated. Absence of suitable coordination mechanism between TRPs or gNBs that need to receive the uplink positioning signal (e.g. SRS signal) and the TRPs or gNBs in the neighborhood that also schedule transmission on the same resources is an issue which needs to be addressed.

Prior art WO 2011/148211 A1 discloses methods, devices, and systems for determining positions of UEs based on uplink position signals. Cooperating base stations measure received positioning signals and report measurements to serving base stations. Cooperative base stations can also adapt resource allocation to mitigate interference on the uplink positioning signals. Cooperation between the base stations can be coordinated via inter-base station links, e.g., X2 interfaces in LTE systems.

WO 2012/075050 A1 describes a system for locating UEs based on measurements of downlink beacon signals. Interference on/by femtocell beacons is reduced by temporarily stopping transmissions (e.g., on the traffic channel and/or a beacon channel).

ANDREW SOLUTIONS: "Uplink signals for LTE network based positioning", 3GPP DRAFT; R1-094485 RAN WG1, Jeju, Korea; 20091109 - 20091113 describes locating UEs using uplink Sounding Reference Signals.

### SUMMARY

It is thus an object of embodiments herein to solve the above-mentioned drawback by providing a method and an apparatus for reducing interference caused to or by positioning signals in a wireless communication system.

According to an aspect of embodiments herein, there is provided a method performed by a first network entity acting as a location measurement function or location management function for reducing interference caused to positioning signals or by positioning signals in a wireless communication system, the method comprising: acquiring, from a serving network node serving a user equipment, UE, a configuration of an uplink positioning signal and information on uplink resources for the UE to transmit the uplink positioning signal. The method further comprises identifying at least one network entity that need to receive the uplink positioning signal from the UE to be positioned; collecting information about each neighboring cell neighboring at least one network node nearest the at least one network entity; informing each network node controlling a neighboring cell to keep certain uplink resources constrained or unscheduled to avoid interference with the uplink resources used by the UE to transmit the uplink positioning signal to said at least one network entity; and configuring a reservation resource or a reservation resource slot in the downlink, which indicates reservation of resources for transmitting said uplink positioning signal and informing the at least one network entity and each network node of each neighboring cell about the configured reservation resource slot or reservation resource.

According to another aspect of embodiments herein, there is also provided a location server comprising the first network entity , the location server comprising a processor and a memory, said memory containing instructions executable by said processor whereby the network entity is operative to perform any one of the subject-matter of method claims 1-7.

There is also provided a computer program comprising instructions which when executed on at least one processor of the location server including the network entity according to claim 8, cause the at least said one processor to carry out the method according to any one of claims 1-7.

A carrier is also provided containing the computer program, wherein the carrier is one of a computer readable storage medium; an electronic signal, optical signal or a radio signal.

According to an aspect of embodiments herein, there is provided a method performed by a user equipment (UE) according to any one of method claims 9-11.

There is also provided a UE comprising a processor and a memory containing instructions executable by the processor whereby the UE is operative to perform any of method claims 9-10.

According to an aspect of embodiments herein, there is provided a method performed by a network node according to any one of method claims 12-14.

According to an aspect of embodiments herein, there is provided a method performed by a network node according to any one of method claims 12-14.

There is also provided a network node comprising a processor and a memory containing instructions executable by the processor whereby the network node is operative to perform any of method claims 12-14.

An advantage with embodiments herein is to avoid/reduce the interference caused to or by positioning signals. This is advantageous in scenarios wherein power of the interference signal significantly received at a network entity exceeds the power of the uplink positioning signal.

### BRIEF DESCRIPTION OF THE DRAWINGS

Examples of embodiments and advantages of the embodiments herein are described in more detail with reference to attached drawings in which:
- Figure 1A: depicts a network scenario illustrating interference caused to uplink positioning signal transmitted by a UE.
- Figure 1B: depicts entities and interfaces in a 5G based wireless network.
- Figure 2: depicts an uplink information request procedure in a UTDOA procedure in an LTE system.
- Figure 3: depicts a reference architecture for UE positioning in NG-RAN (in 5G system).
- Figure 4A: illustrates neighbor cell information exchange procedure, successful operation.
- Figure 4B: illustrates neighbor cell information exchange procedure, failure operation.
- Figure 5: illustrates uplink positioning slot information exchange procedure.
- Figure 6A: illustrates uplink positioning slot configuration exchange procedure.
- Figure 6B: illustrates uplink positioning slot configuration exchange procedure (failure operation).
- Figure 7: illustrates a bitmap of allocable RE pattern at gNB.
- Figure 7A: illustrates use of bitmap for PUSCH in neighboring cell.
- Figure 7B: depicts of RE allocation in own cell.
- Figure 7C: depicts allocation of SRS resources in neighboring cell, conveyed through the X2 interface or conveyed via NRPPa protocol.
- Figure 7D: depicts bitmap of the REs within the SRS region which could be used.
- Figure 7E-7F: depict free resources reported by user 1 (UE1) and user 2 (UE2) respectively.
- Figure 8: illustrates an example of channel reciprocity between positioning reference signal and reservation indicator signal.
- Figure 9: depicts an example of mapping between DL reservation frame or slot and uplink PRS signal.
- Figure 10: illustrates uplink positioning reservation slot information exchange procedure.
- Figure 11: illustrates uplink positioning reservation slot configuration exchange procedure.
- Figure 12A: and Figure 12B illustrate examples of a resource block used for reserving UL-PRS signal.
- Figure 13: illustrates an example of a bitmap of used resources as reported by a UE.
- Figure 14: illustrates an example of UL-PRS resources being reused in a neighboring cell.
- Figure 15: illustrates a flowchart of a method performed by a location measurement or management function according to some exemplary embodiments herein.
- Figure 16: illustrates a flowchart of a method performed by a network node according to some exemplary embodiments herein.

### DETAILED DESCRIPTION

In the following, a detailed description of the exemplary embodiments is described in conjunction with the drawings, in several scenarios to enable easier understanding of the solution(s) described herein.

The embodiments herein describe a procedure to avoid or reduce interference caused to or by the positioning signal in scenarios, for example, where the power of an interference signal received at a network entity (e.g. a TRP, RP, gNB) or at a transmission measurement function (TMF) exceeds the power of the uplink positioning signal.

In LTE, the Sounding Reference Signal (SRS) has been used as the positioning reference signal in the uplink since LTE Rel. 13 [1]. In LTE, SRS was limited to the last Orthogonal Frequency Division Multiplexing (OFDM) symbol in a slot containing OFDM symbols, where the primary purpose was to allow frequency-selective scheduling. In 5G, also known as New Radio (NR), the location of SRS was kept flexible to any 6 OFDM symbols within a slot. In the initial discussion and agreements in the third generation partnership project, it has been agreed that SRS will be used as an uplink positioning signal and it has also been agreed that the SRS may be transmitted in any of the OFDM symbols in a slot where SRS for positioning purposes will be transmitted.

The new development necessitates coordination of resource allocation among different gNBs, so that the interference caused to signal intended to be received for positioning at the respective network entity or TRP is managed.

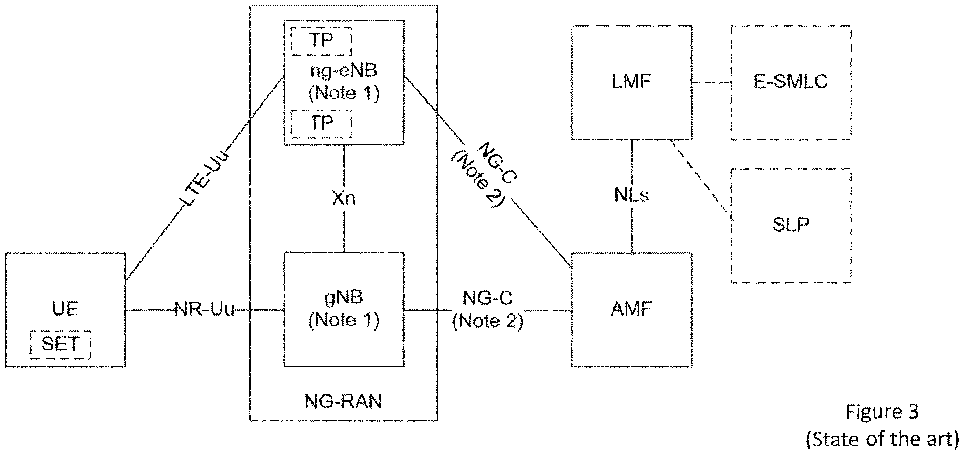

The functional description of the UE positioning is discussed in 3GPP TS 36.305 [7] as described earlier and the associated signaling are detailed out among others in 3GPP TS 36.355 [5] for signaling between UE and E-SMLC using the LPP protocol; 3GPP TS 36.455 [6] for signaling between eNB and E-SMLC using the LPPa protocol and the signaling between the E-SMLC and LMU is specified using SLmAP protocol 3GPP TS 36.459. The process flow/approach for uplink positioning using SRS is shown in Figure 2 for LTE system and was previously presented. The reference architecture for positioning in NR-RAN (in 5G) is depicted in **Figure 3** according to section 5 of 3GPP TS 38.305 [7]. It is assumed that the location service request is received at the AMF (Access Management Function), regardless of whether it originated from the UE from the network side.

As previously described, a drawback with this known prior art is that interference issues arising from transmissions in the neighboring cells is not considered. The interference situation as the one depicted in Figure 1 arise when resources are not coordinated. Absence of suitable coordination mechanism between TRPs or gNBs that need to receive the uplink positioning signal (e.g. SRS signal or PRS signal) and the TRPs or gNBs in the neighborhood that also schedule transmission on the same resources is an issue which needs to be addressed.

The following network entities are described with functionality for the solution according to some embodiments.

**Transmission and reception point (TRP)** - the network entity where the positioning signal is transmitted or received. The main functionality is similar to TP (Transmission Point) in LTE. Additionally, it may also broadcast downlink position signals and other signals as needed for positioning and coordination of positioning purposes.

**Transmission measurement function (TMF)** - the network entity or network function for measurement which estimates the propagation parameters from the signal received at TRP.

**Location management function (LMF)** - the network entity responsible for coordinating location computation procedures, which among other collects configuration from gNBs, passes the configuration to the measurement entity.

A coarse correspondence between LTE entities and NR entities is: TRP (NR) 4 TP (LTE), TMF (NR) → LMU (LTE), LMF (NR) → E-SMLC (LTE). The association is done to be able to compare existing uplink positioning in LTE with the proposed approach for NR.

It should be noted that the name of the network entities mentioned above are used exclusively for the purpose of explaining the solution. The terminology in the specification of technical standards may differ from those mentioned here and their functionality may extend beyond what is necessary for the proposal.

In the followings a method for reducing interference caused to positioning signals in a wireless communication system is presented according to some embodiments herein.

The method is performed by a first network entity acting as a location server. The first network entity may be the LMF. The method comprising:
1) acquiring, from a serving network node (serving gNB) serving UE a configuration of an uplink positioning signal and information on uplink resources for the UE to transmit the uplink positioning signal.
2) identifying at least one network entity (LMU or TRP), that need to receive the uplink positioning signal from the UE to be positioned;
3) collecting information about each neighboring cell neighboring at least one network node nearest the at least one network entity; and
4) informing each network node controlling a neighboring cell to keep certain uplink resources constrained or unscheduled to avoid interference with the uplink resources used by the UE to transmit the uplink positioning signal to said at least one network entity. It should be noted that a neighboring gNB may apply beam configuration which do not cause interference and hence not all resources need to be kept unscheduled or muted.

In greater details:
1) The LMF coordinates with the serving gNB to acquire a configuration of the uplink position signal
2) the LMF identifies the potential TRPs or LMUs wherein the positioning signal needs to be received. This may include TMF or LMU which are standalone. A standalone TMF or LMU is a reception network entity only.
3) To collect information about the neighboring cells, the LMF interacts or coordinates with gNBs that are nearest the at least one network entity (or TRP). It should be mentioned that by nearest is meant a network entity that is an integrated part of the cell of the gNB or that is closest to the gNB or the TRP concerned. For standalone LMUs (or TRPs), the physical location of TRPs or LMUs in a common coordinate frame is known when the TRP or LMUS registers itself with the LMF. This information may be used by the LMF among other information available to deduce the neighbor list.
   The LMF may configure the LMU or TMF to make measurements using the configuration given by the serving gNB.
4) When the information on the neighboring cells is collected by the LMF, the LMF informs each gNB controlling the neighboring cells to keep certain uplink resources constrained or unscheduled to avoid interference with the uplink resources of the uplink positioning signal. As an example, the LMF identifies the cells where there should be no PUSCH or SRS transmission on certain REs to the positioning link and communicates this information to the gNBs controlling the cells identified as neighbors of the network entities or TRPs used for receiving the the positioning signals, requesting these gNBs to leave these resources idle or unallocated.
5) The neighboring gNBs may take this information into account while scheduling transmissions to its UEs, for avoiding scheduling UEs on the resources or scheduling UEs that do not cause interference to ongoing positioning signal. To achieve this, the gNB may command one or more UEs to measure the received signal power e.g. the Reference Signal Received Power (RSRP) on one or more of downlink reference signals originating from TRP with a given Physical Cell ID (PCI) index.
6) The serving gNB may then configure the UE to transmit the uplink positioning reference signal (e.g. SRS) using higher layer signaling (e.g Radio Resource Control (RRC) [3]).
7) The LMF may configure the TMF, TRP or LMU to make measurement using the configuration given by the serving gNB.

As will be described in greater details, to ensure that the resources which are left unused in a cell to preemptively avoid interference may be reused as follows in accordance with some embodiments herein.
1) The first network entity (LMF) configures a reservation resource or a reservation resource slot in the downlink, which indicates reservation of resources for transmitting the uplink positioning reference signal, and informing the at least one network entity and at least one node or each network node (or gNB) of each neighboring cell about the configured reservation resource or reservation resource slot. As an example, the LMF identifies such slot by interacting with:
   a) gNBs controlling TRPs used for receiving uplink positioning signals and
   b) gNBs controlling TRPs identified as neighbors to the TRP(s) used for receiving positioning reference signals.
2) The network entity or LMF configures a mapping between the reservation resource or reservation resource slot and the uplink positioning reference signal resource it addresses.
3) The TRPs intending to receive positioning signals on the resources for positioning signal are configured to transmit a reservation indication signal or a reservation indicator signal on the reservation resource.
4) The gNB controlling cells identified as neighbors of TRPs for receiving positioning signals may command one or more UEs to listen to the reservation resource or reservation resource slot and report an outcome of one or more measurements.
5) The gNB may use this information while scheduling transmissions.

According to an embodiment, at least one gNB (or standalone TMF) may be allowed to signal an interference margin on each of the resources, either requested or indicated as an alternative to the LMF.

According to an embodiment, the LMF may be allowed to request a gNB to delegate the allocation of certain slots to the LMF. The allocation of users to such slots, control of power, etc. may be carried out directly by the LMF.

The LMF may coordinate with gNB(s) to obtain resources where the reference signals are transmitted and where the reservation resource may be located. In this case, the LMF takes coordinating role whereas the decision regarding configuring and allocating resources remains with gNB(s). In the second alternative, the LMF is responsible for making scheduling and determining the configuration itself and sending this configuration for UEs to their serving gNB(s). The serving gNBs then take this configuration provided by LMF and signal the configuration to the UEs using higher layer signaling such as RRC signaling.

In the following a detailed description of the previously described embodiments is presented.

### 1.1) Identification of network entities (TRP(s) or LMUs) for receiving uplink positioning signal

As previously described, at least one network entity that need to receive uplink positioning signal(s) is identified. In this case, when a location service request is received by the LMF, the LMF identifies a list of TRPs to receive the uplink positioning reference signals (or PRS). The identification may be performed by the LMF by using a location of the serving gNB, or by estimating (roughly) a location of the UE. One or more LMUs (or TRPs) may provide their location to the LMF using a setup phase, and a rough estimate of location of the UE may be available based on a cell ID or a cell-portion ID.

Additionally, the LMF may command the UE to report measurements on downlink reference signals, Synchronization Signal (SS) or Channel State Information Reference Signal (CSI-RS) to make sure that a TRP and UE are within range of one another. This may be performed by sending measurement request for target PCI, directly using the LPP protocol (or corresponding protocol in 5G).

Alternatively, the gNB may report a set of PCIs and the measurements the UE has already reported to the serving gNB. This alternative would be communicated over the 5G New Radio Positioning Protocol A (NRPPa). NRPPa protocol is defined in 3GPP TS 38.455 [4].

### 1.2) identifying neighboring cells of network entities or TRPs (or LMUs) receiving positioning signals.

As previously described, information on neighboring cells is identified or collected.

PUSCH or SRS signals origination in the neighboring cells interfere with the reception of positioning reference signal at the intended TRPs. According to an embodiment, the LMF send a request to each of the network nodes (or gNBs) controlling or is nearest at least one TRP which need to receive the positioning signal to provide a list of neighboring cells.

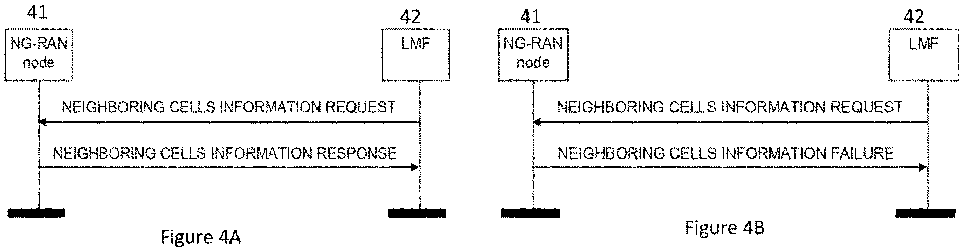

**Figure 4A** depicts a neighbor cell information exchange procedure (successful operation). As shown, the LMF 42 sends a neighboring cell information request to a network node (NG-RAN node 41). According to an embodiment, the request includes include at least a radio frequency channel number, e.g. a E-UTRA Absolute Radio Frequency Channel Number (EARFCN) or NR-Absolute Radio Frequency Channel Number (NR-ARFCN), an UpLink (UL) bandwidth and a cyclic prefix corresponding to the uplink positioning reference signal to be transmitted.

The neighboring cells information response from each network node to the LMF may include at least the PCI of the neighboring cell. The response may further include Single Frequency Network (SFN) initialization time - traceable to common reference - which is usually time in seconds relative to 1 January 1900, expressed as a bit string of 64 bits, out of which first 32 bits encode seconds and last 32 bits encode fractional part of a second. In a normal case, at least the cell where the UE to be positioned is connected to will be reported.

In case of a standalone TMF (LMU), which is not integrated into the gNB or the cell, the neighboring cell relation is not maintained. However, as previously described, such LMU or TRP provides its geographical coordinate or position when registering with the E-SMLC or LMF. This can be used to deduce its neighboring cells.

**Figure 4B** a neighbor cell information exchange procedure (failure operation).

The information failure is generated when the network node or NG-RAN 41 node (gNB or ng-eNB) does not have any record of neighboring cells on the required center frequency and bandwidth recorded.

### 1.3) Configuring uplink positioning slot

The serving gNB and the TRPs used for TMF may be configured to receive positioning reference signals. All other neighboring cells should ideally not schedule any uplink transmission within the bandwidth of the positioning signals. This would create low interference subframes in the uplink, albeit at a suboptimal reuse of resources.

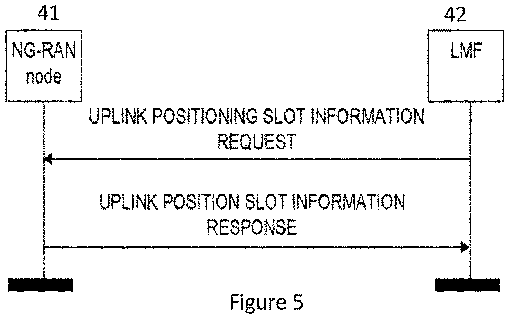

**Figure 5** illustrates uplink positioning slot information exchange procedure between the NG-RAN node 41 and the LMF 42. The LMF 42 transmits to at least one NG-RAN node 41 an uplink positioning slot information request and provides a configuration of a possible slot for positioning purposes. The NG-RAN node(s) 41 replies, in an uplink position slot information response and/or provide alternatives. If all NG-RAN nodes 41 accept the configuration provided by the LMF 42, then the LMF 42 proceeds with the configuration acceptable to all of the NG-RAN nodes.

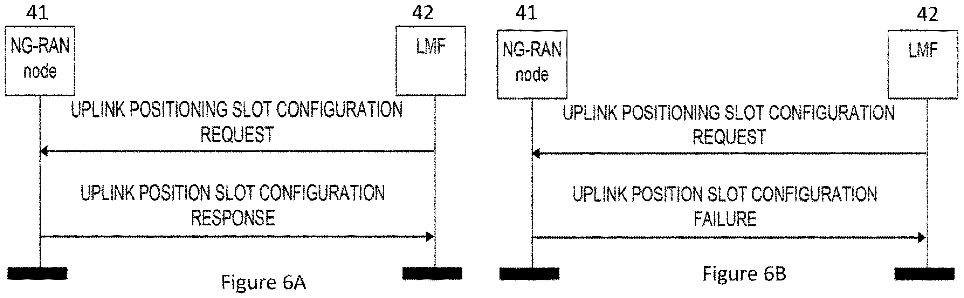

**Figure 6A** illustrates uplink positioning slot configuration exchange procedure between the NG-RAN node 41 and the LMF 42.

As shown, and according to an embodiment, the LMF 42 transmits to at least one network node (NG-RAN node 41) an uplink positioning slot configuration request which includes at least a configuration of the uplink positioning reference signal, PCI, and Role. For example, for uplink positioning using SRS resource it contains all the information configuring SRS resource. An IE (Information Element) Role contains schedule (for serving cell), measure (for TRP connected to TMF) and silent (for the neighboring cells who are supposed to keep the resource free).

According to an embodiment, if the configuration provided by the network node collides with another uplink positioning reference (UL PRS) signal measurement configured on the same Resource Element (RE), the NG-RAN node 41 also provides the dynamical range of the signal by specifying the minimum and maximum signal power the new positioning signal must arrive, so that this does not cause near-far problems when separating two users (or UEs) in the code domain. If the signal is too low, the signal from a new UE may not be identified and if it is too high, the signal of other UEs may not be resolved.

The uplink positioning slot configuration response may include an enumeration (OK, NOK) for the configured slot, x slots preceding the configured slot and x slots following the configured slot; x may take any suitable value.

According to an embodiment, if all entities or network nodes respond with the same enumeration (e.g. OK), the uplink positioning slot can be created, by the LMF, in the configured slot. Otherwise, the LMF tries to search for the slot where all the other entities/network nodes also respond OK, by repeating the above sequences.

After receiving the OK from all entities or network nodes, the configuration request is made with the same parameters as the information request. An OK response is received if the slot can be configured. If something has changed, and the gNB can no longer configure the positioning slot, a failure message is raised as shown in **Figure 6B****.**

### 1.4) Transmission on neighboring cells marked silent on configured resources.

Although some REs are marked as used in the neighboring cells (for receiving PRS signals) and the cell or cells is/are expected to keep silent on these resources, other REs may still be used for transmission. The map of available REs where the user is not expected to stay silent may be signaled to the UE while scheduling PUSCH resources in the uplink. The RE used for positioning follows a regular (and possibly staggered) pattern. Therefore, signaling a bitmap of the used/unused pattern of REs for one RB should inform the UE which REs it is expected to keep free or unused. This approach would keep the PUSCH free from interference from SRS resources and vice-versa.

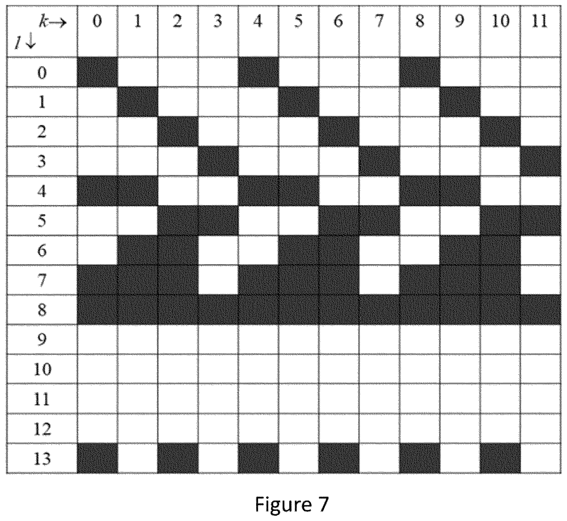

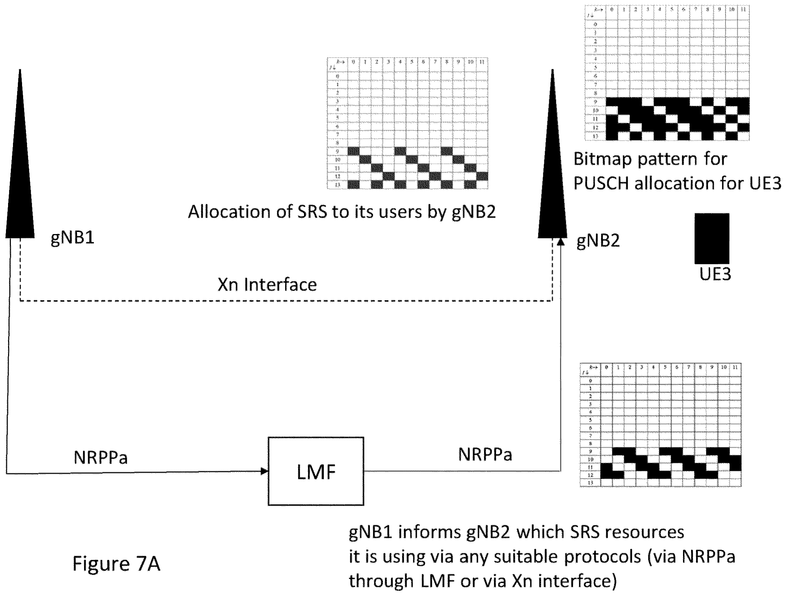

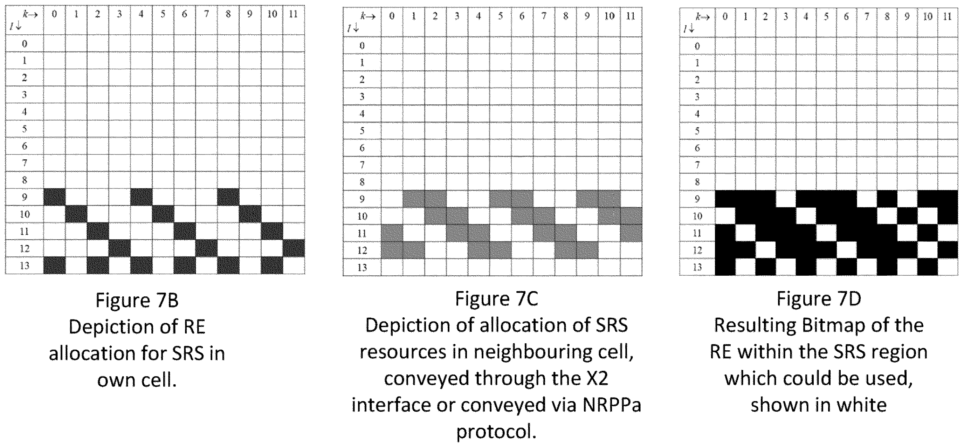

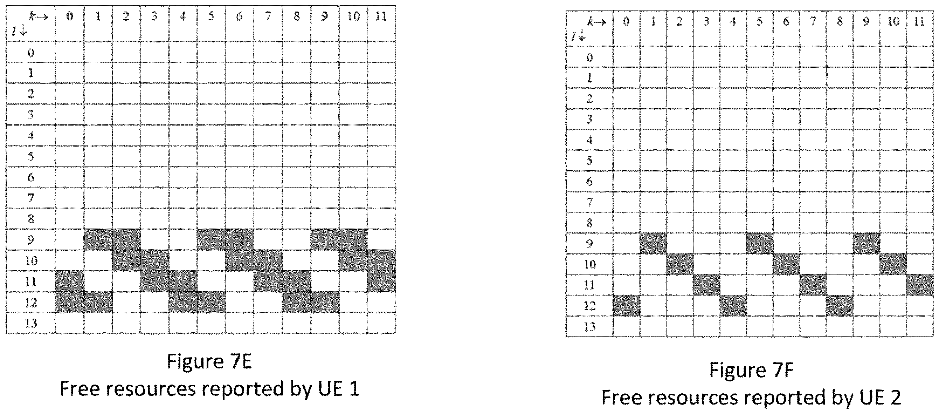

An example of a bitmap of REs that are unused in a neighboring cell, from the information available to the serving gNB, which is expected to remain silent is shown **Figure 7****.** The REs that are unused in a neighboring cell are white-coloured.

When the UEs are scheduled by the gNB, the gNB may indicate the pattern of available REs within the Resource Block (RB) by signaling a new field "bitmap pattern" in the Downlink Control Channel (DCI) to the UEs. Since it is beneficial from time resolution perspective to utilize the entire carrier bandwidth, the likelihood that the uplink positioning signal, for example SRS, allocation pattern will not change within the RB assigned by DCI. Hence, it may be sufficient to give the bitmap pattern once. However, for wider bandwidth allocation, if the pattern changes, it should be possible to pair bitmap pattern with a run-length and provide this as a set of bitmap and run-length pairs.

Figure 7A illustrates an example of the use of a bitmap pattern for PUSCH in a neighboring cell.

It is here assumed that gNB1 schedules SRS for the UE to be positioned and gNB2 is a neighbor of gNB1. gNB2 also schedules SRS for UEs. This is shown in the figure. If a UE is scheduled PUSCH on a RB, the REs belonging to the region where SRS could be transmitted itself or other UEs in the cell are left empty. Without other restrictions, the UE could use all REs not used for SRS for PUSCH.

This means that if the bitmap pattern like that in Figure 7A could be signaled to the UE, the UE could then use all white (non-filled) REs for PUSCH transmission.

On the other hand, since gNB2 is a neighbor to gNB1, gNB1 or the LMF may inform gNB2 which resources are scheduled or used for SRS in gNB1 and gNB2 should not schedule transmission on these resources. The bitmap pattern indicating which resources are used is conveyed to gNB2 as shown in Figure 7A via the Xn interface or through the LMF via the NRPP interface. gNB2 makes use of this information to determine a pattern where the REs unused for SRS could be used for PUSCH instead without causing interference. Additionally, if the bitmap does not change between two SRS instants, the pattern previously signaled is considered valid for both instants.

Figure 7B and Figure 7C illustrate the bitmap patterns shown in Figure 7A. If the patterns of Figure 7A-7B are combined, the available resources which can be assigned by the gNB to its user is shown in Figure 7D. The bitmap pattern of Figure 7C and the length of the pattern (in number of resource blocks) may be conveyed as an additional information within the DCI. Therefore, a user transmits PUSCH on the REs shown as white and avoids transmission on resources shown as black.

It should be noted that if the reservation mechanism according to previously described embodiment is in use, Figure 7C looks different for different UEs, UE1 and UE2. It is here assumed that the serving gNB commanded UE1 and UE2 to listen to the reservation mechanism and report a RE bitmap pattern and the length of the pattern. In this case, the bitmap pattern is not exchanged between gNBs or via the LMF but instead sensed (by listening to the reservation slot) and deducing free Res and reporting the pattern to the gNB, so that the gNB may takes this information into account while scheduling UEs. If a UE1 is scheduled, the bitmap shown n Figure 7D would be sent (combination of patterns Figure 7A and 7B). If UE2 is scheduled, the bitmap pattern including the combination of Figure 7A and Figure 7F would be used. Figure 7E shows free resources reported by UE1 and Figure 7F shows free resources reported by UE2.

The purpose of providing a bitmap pattern for SRS use with PUSCH grant is to make sure that the REs unused are not left idle but used for PUSCH transmission. If the bitmap is not provided (current standard), the UE may not transmit data on the region reserved for SRS. If the bitmap is provided, that indicates which REs (within the SRS region) are unused, the UE can schedule PUSCH data on those slots. Alternatively, the gNB may schedule a UE and allow it to transmit on the SRS region if it senses this region free.

### 1.4.1) Cooperative enhancements

### 1.4.1.1) Using reservation indicator signal

The reservation indicator signal is a sequence of a pilot signal that is transmitted by a TRP on one or more resource elements during the reservation indicator slot, which is mapped to the resources on the positioning slot where positioning signals are transmitted. If a signal is transmitted by the TRP on the reservation indicator slot, the TRP indicates that it expects to receive positioning signal from one or more UEs on the resource elements (positioning resources) reserved by this reservation indicator signal.

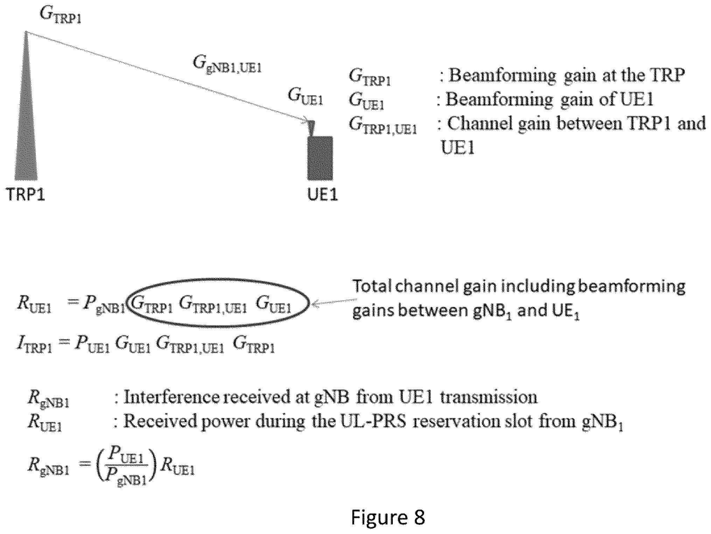

When the bitmap (e.g. the one shown in Figure 7) is transmitted to the UE in accordance with an exemplary embodiment, the gNB signals to the UE the resources that are used in one of the neighboring cells or conversely the REs where the UE is free to transmit. This is a conservative estimate of the REs that should not be used. Nevertheless, some of the resources that are used for positioning in a given cell may be reused for data or even reference signal transmission in the neighboring cell, if the gNB can schedule it to a user that causes interference below the maximum tolerable limit (i.e. the uplink positioning resource is deemed free) to existing positioning link. To this effect, the cell must be able to predict in advance know how much interference a UE served by this cell causes to the positioning link. Consequently, it may schedule the users that cause interference below a tolerable limit to the positioning cell. The interference awareness is achieved by exploiting the reciprocity between the channel gains in the uplink and downlink and transmitting a reference signal. The channel reciprocity is the key concept of Time Division Duplex (TDD), which can be used to establish the relation between interference in the downlink and reservation signal in the uplink [2]. This is explained with the help of **Figure 8** which depicts reciprocity between positioning reference signal and a reservation indicator signal.

In this figure, it is depicted that TRP1 has transmitted a reservation indicator signal on a reservation slot corresponding to the slot where the UL-PRS (i.e. SRS) signal would be transmitted. A UE, UE1 which is configured to listen to this reservation slot, measures the power during this reservation slot. Since the channel gains in uplink and downlink are reciprocal, the UE can measure the signal power during the downlink slot and relate it to the power received at the TRP1 if both UE1 and TRP1 have same antenna gains during transmission and reception of the reservation indicator and the transmission and reception of SRS signal. The total interference is nevertheless not reciprocal but is dominated by the strongest links. Hence, listening to the reservation slot provides a good indication of whether collision with an existing PRS transmission from another UE is anticipated or not

In Figure 8 the TRP1 transmits a reference signal received by UE1. Provided that the beamforming gains at the TRP1 and UE1 are identical or similar, the RSRP estimated using REs used for transmitting positioning signal may be used for estimating the amount of interference UE1 would cause to the positioning signal received at TRP.

Hence, the steps for predicting interference cause to positioning signal from transmission in neighboring cells may include:
1) The TRP (or LMU) which intends to receive a positioning signal broadcasts a reservation signal in the downlink on a resource configured to transmit the reservation signal.
2) The resource used for transmitting the reservation signal is known a priori within the region where the interference needs to be estimated. This information may be conveyed by a new message defined for conveying this information.

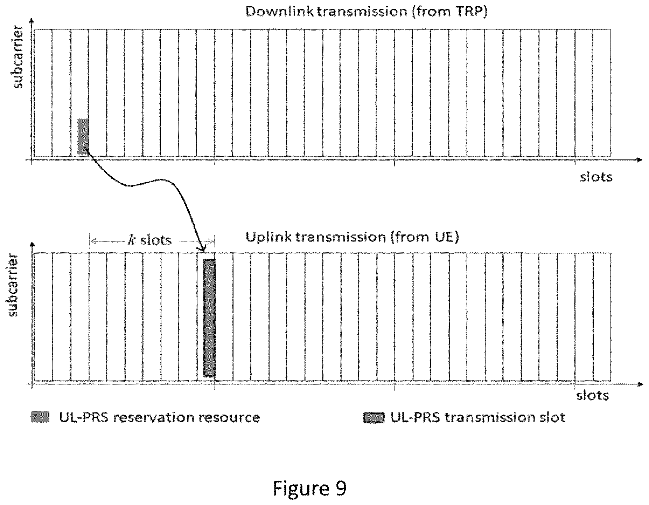

To this end, the LMF is configured, according to an embodiment, to inform all gNBs in the neighborhood of uplink PRS transmission the reservation resource and its mapping to the UL-PRS signal. An example of such mapping is shown in **Figure 9** which depicts an example of mapping between DL reservation frame and uplink PRS signal. The UL PRS resource reservation and the UL-PRS transmission slot are depicted. Strategies of mapping are elaborated further in section 1.4.1.1.2.
3) The UE which intends to reuse the REs where positioning signal is transmitted, listens to the reservation signal, and based on RSRP measurement on the reservation signal infers whether this UE observes the slot to be free or not
a. The UE may either avoid transmitting on this slot
b. The UE may transmit with reduced power, so as to limit interference to the positioning signal.

The assumption here is that the channel in the downlink and the uplink are correlated in large-scale fading parameters such as distance dependent pathloss and shadowing - and therefore allow using the channel reciprocity for scheduling purposes even in Frequency Division Duplex (FDD) scenario. For the TDD, listening to the reservation slot allows a more precise estimation of a Co-Channel Interference (CCI) caused by the UE in neighboring cell to the UL-PRS transmission.

### 1.4.1.1.1) identifying reservation resource for UL-PRS

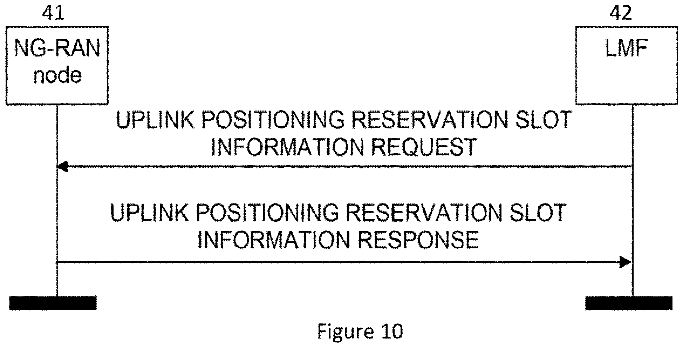

Establishing a reservation resource in the downlink which can signal use of resource. **Figure 10** illustrates an uplink positioning reservation slot exchange procedure between the LMF 42 and a NG-RAN node 41.

The LMF 42 is configured to communicate with the set of network nodes (NG-RAN nodes) identified earlier to schedule, receive or remain silent to agree on resource proposed by the LMF.

In sending the uplink positioning reservation slot information request, the LMF provides information about the RBs and slot index. The information about the RBs may be sent in a manner similar to RIV (Resource Indication Value) in the uplink, which indicates the starting RB and the length of the reservation slot in number of RBs across the frequency.

In the uplink positioning reservation slot information response message, the NG-RAN confirms whether it can configure this reservation slot, but also provides alternatives in the form of RIV and slot index pair. The number of alternatives suggested and the region (in time and frequency) where the alternatives may be suggested can be configured in the information request.

If the TRP or a NG_RAN node is incapable of transmitting a reservation signal, then it should send a failure message. This should typically the case when a standalone TMF or standalone LMUs is used.

From the received response, the LMF, according to an embodiment, configures the slot which is commonly suggested by all NG-RANs, preferably the one suggested by the LMF, and configures it as a reservation resource slot.

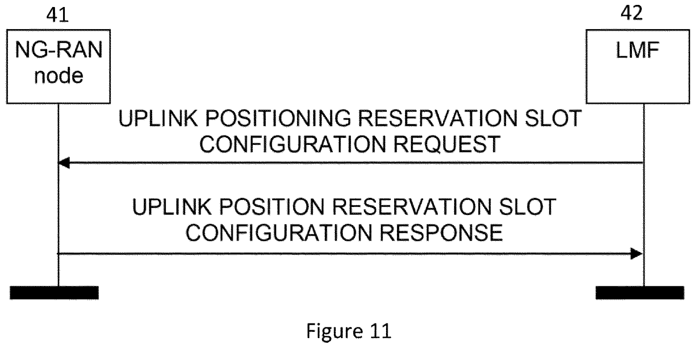

Referring to **Figure 11****,** there is illustrated an uplink positioning reservation slot configuration exchange procedure between the LMF 42 and at least one NG-RAN node 41.

The uplink positioning reservation slot configuration request may include the resource to be used as reservation resource, i.e. slot index and the RIV value. In addition and according to an embodiment, the LMF also configures the association or mapping of the reservation resource to the specific uplink positioning slot.

It should be noted that the antenna ports or antenna gains used both at the transmitter and the receiver are the same during the reservation slot and the transmission slot.

If the NG-RAN node is a standalone LMU/TMF (e.g. a TRP with only receive functionalities) and does not have transmission capabilities, then the reservation is transmitted by the TRP located closest to the LMU. This creates an exclusion region approximately the same as it would have been created if NG-RAN node had its own transmission capability.

### 1.4.1.1.1) Mapping between reservation slot and UL-PRS slot

As previously described, the LMF configures a reservation resource slot in the downlink, which indicates reservation or resources for transmitting uplink positioning signal and the LMF informs the network nodes (and network entities) about the the configured reservation resource slot.

The LMF is configured to perform a mapping between the reservation resource slot and the resources used for the uplink position signal.

The REs within the reservation resource slot which maps to a certain configuration of UL-PRS REs may be arbitrarily configured by the LMF, and communicated to the network nodes (or gNBs). The gNBs use this information for scheduling decisions and for commanding the UEs to report on the RSRP on the configured reservation resources. The reservation REs comprises one or more REs which transmit a pilot signal (for smaller number or REs available for positioning) or a sequence (if the number of REs configured as reservation resource is large enough).

### 1) Scaled-mapping

With this mapping scheme, the comb factor, the comb offset and OFDM symbol within the reservation slot are kept identical to those parameters in the UL PRS slot. Hence, the REs used for an SRS resources can be indicated by the comb-factor, which provides Information about how often the RE used for transmitting SRS repeats itself. In Figure 7B, the comb-factor is 4 in OFDM symbols 9-12 and is 2 in OFDM symbol 13. The comb-offset, which indicates an offset with respect to the first RE the pattern on RE that is used for transmitting SRS. In Figure 7B, the offset is 0..3 inn OFDM symbols 9 to 12 respectively and 0 in OFDM symbol 13.

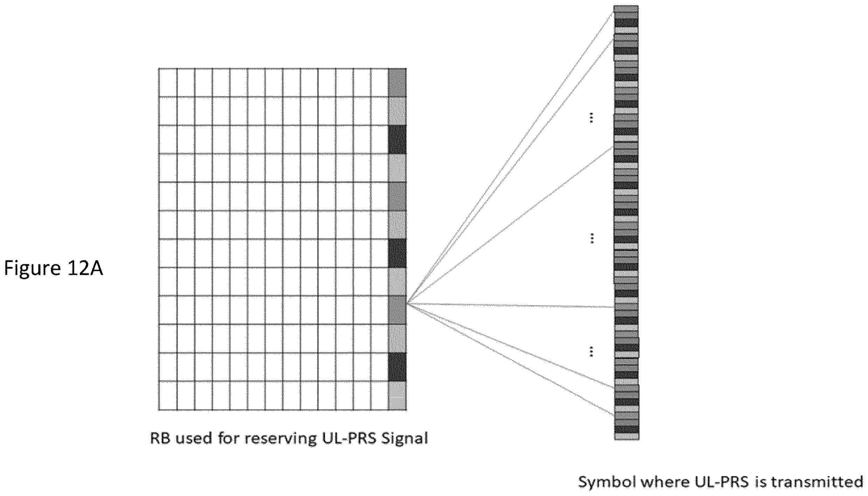

The number of RBs used for conveying the downlink signal may be different from the number of RBs used for transmitting the positioning signal. **Figure 12A** illustrates an example of a RB used for reserving the UL-PRS signal. In this example, the mapping of RB of length 1 to the UL-PRS occasion is indicated. RSRP measured on the REs coloured dark-grey would reserve the resources marked as dark-grey during the UL PRS signal. Therefore, a UE which does not hear signal power which is below the critical level may be scheduled on the uplink.

The advantage of this method is that the reservation signal could be a part of a downlink positioning reference signal, which doubles its role as a reservation resource.

The reference signal may allow downlink Time of Arrival (ToA) measurement and the uplink part may allow for uplink ToA measurement. Thereby Round Trip Time (RTT) could be estimated in an interference aware manner.

### 2) Block-mapping

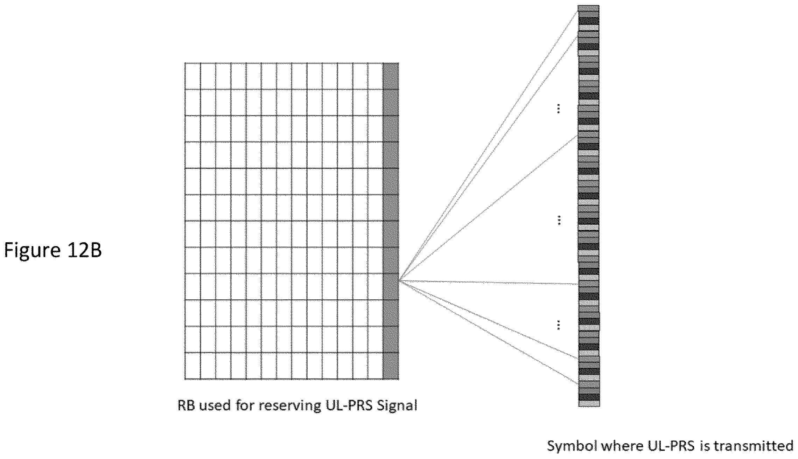

With the block mapping method, a gNB may transmit data to any user (or UE) served using the same beam the TRP would use later on the UL-PRS slot for receiving positioning data. **Figure 12B** illustrates an example of a RB used for reserving UL-PRS signal. And the symbol where the UL-PRS signal is transmitted.

In this figure, a set of consecutive REs in the reservation slot map to a particular comb-factor and offset. In this particular example, the filled REs on the UL-PRS slot map to comb factor of 4 and comb-offset of 3, on the last OFDM symbol (in the PRS slot). For the PRS slot, only the last slot is shown. For a different offset and comb-factor, a second RB within the reservation slot may be used.

Since a UE in the neighboring cell only needs to make RSRP measurement, it does not matter what data is transmitted. Therefore, the gNB could use the RB to transmit data to a user (or UE).

### 1.4.2) Interference aware transmission on the free or unused REs

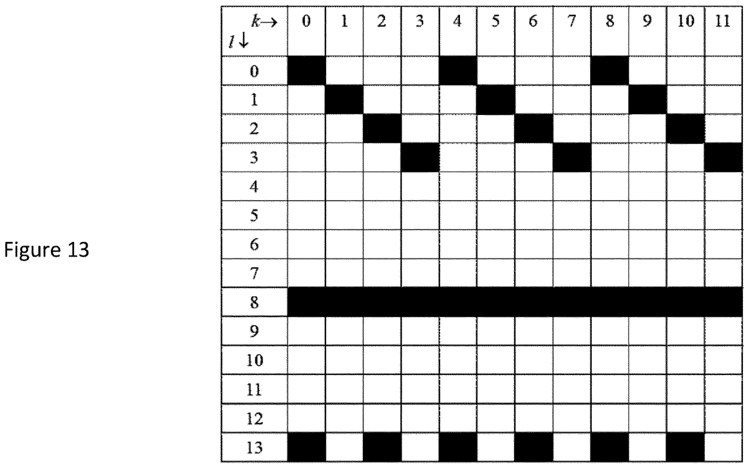

A UE on a neighboring cell, which is supposed to avoid transmission on the resources used for positioning may make measurements on the reservation resource. A UE may be provided the time/frequency location of the reservation resource to search for the reservation indication signal. The results of measurement may be conveyed by the UE as the detected pattern on the RBs where it has been commanded to measure. An example of the RB bitmap pattern determined by the UE as free is shown **Figure 13****,** where the free REs are shown as white and the used ones (where the UE may not transmit) are depicted as black.
1) Provide feedback to the gNB with information regarding the UL-PRS resources it observes as unused in the nearby cells, to aid the serving gNB to make scheduling decisions.

In this scenario, the UL-PRS reservation slot and UL-PRS transmission slot are separated sufficiently in time to accommodate UE feedback between these two instants.
a. The serving gNB determines the best user (or UE) to be scheduled, and provides grant on the resources it observes free.

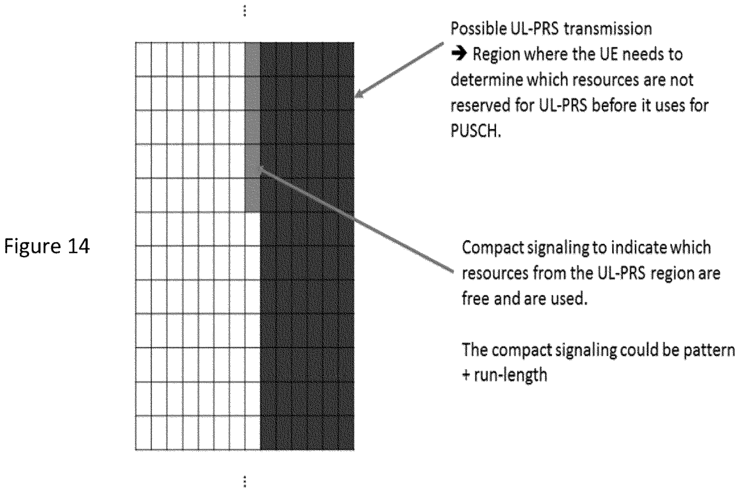

To reduce signaling, the UE may only report the results on OFDM symbols where the REs identified as not usable differ from those identified by the gNB using neighboring relations.
Or,
The gNB reusing the UL-PRS resources provides grant to a UE such that the scheduling decision is based on the resources not used for UL-PRS (e.g. the first eight OFDM symbols in a slot) and for the UL-PRS, it allows the UE to select the resources it sees free and transmit on these. This information needs to be compactly signaled by the UE to the gNB, so that the gNB knows where the data bits are located. This is depicted in **Figure 14****,** where a single RB from the set of RBs where the UL-PRS is transmitted is depicted.

In **Figure 14****,** a RB is depicted where the gNB has granted UE an uplink grant and the grant covers the first eight OFDM symbols. The remaining 6 OFDM symbols (in black) could be UL-PRS symbol in neighboring cell. The UE finds out or determines by listening to the reservation slot which of these resources are free and conveys this information on the grey region, where compact signaling indicates which of the black resource elements would be used, which comprises a pattern and run-length where this is valid. These could be multiple patterns and run-lengths. If the pattern differs, due to frequency selectivity, the conservative pattern would be chosen because the primary aim is to limit the interference to the positioning link.

If the TRP transmits or receives simultaneously on multiple beams, whether or not the beams are free can be done for each beam separately. Hence, beams could be identified where the neighboring cells would not cause interference to the ongoing transmission of positioning signals.

### 1.4.2.1) Using signaling over interface(s) connecting to the LMF (or e-SMLC)

According to an embodiment, network nodes (e.g. NG-RAN nodes or gNBs or standalone TMFs) may signal to the LMF an additional interference margin on the resources where aforesaid nodes are configured to receive positioning signals. Two cases may be distinguished here:
1) The TRP or network node is receiving positioning signals, and interference margin is based on the signal power of the positioning reference signal(s) it is currently processing.
   In this case, the additional interference margin would help the LMF to decide whether or not the time/frequency code can be reused and a different orthogonal code for the new positioning signal for UE should be assigned. Additionally, the LMF may perform power control based on this information, so that the existing positioning signals are transmitted with lower or higher power.
2) The TRP is not receiving a positioning signal it is processing, and the signal power it currently observes comes from other transmission it is not concerned with.
   In this case, the LMF may decide whether the pre-existing level of interference still allows the new UE to transmit on the same time-frequency slot. This information would be useful to the LMF, whether it may still schedule positioning signal on the resource, for example, using a higher or lower power.

The interference margin may be specified as a margin, where the lower margin specifies the minimum power a new positioning signal could be received with and the higher margin specifies the maximum power a new positioning signal could be received with. The margin may be specified as absolute range or relative to the power of one of the positioning signals it is currently already configured to receive.

The LMF may request gNBs causing interference at the TRP of gNBs/TMFs receiving the positioning cell, to reduce their transmit power.

### 1.4.3) Centralized allocation of a positioning slot by the LMF

According to an embodiment, the LMF may configure slots in the uplink frame to be positioning slots (i.e. use them to schedule one or more UEs for positioning purposes) and the LMF is further configured to request the gNBs to allocate such slots for positioning purposes and delegate the assignment of radio resources to users or UEs in said slots to the LMF.
- According to an embodiment, the LMF is configured to request delegation of radio resources (time, frequency, code, power, beam) from the gNBs that are either serving gNBs, gNBs associated with the TMF where positioning measurements are to be made and from the gNBs that cause interference to the signals from the UE to be positioned.
   ∘ For this, the LMF may indicate the resources where it would take-over the task of scheduling resources from the set of gNBs.
   ∘ The gNBs signal whether they can delegate LMF to take over scheduling on these slots, and also propose x other alternative slots.
   ∘ The LMF based on the feedback, is configured to select the most suitable positioning slot and requests that the gNB delegate the allocation of users on this slot.
   ∘ gNBs confirm the delegation of scheduling of users for the positioning use case on the resources or entire slots.
      ▪ In TDD system, the gNB selects a suitable format so that this slot is an uplink slot.
      ▪ The gNBs may only delegate the scheduling for a certain period of time, after which it may cancel the delegation.
   ∘ LMF is configured to allocate the resources to UEs based on its knowledge of the network.
      ▪ The LMF sends the allocation back to the gNB, so that the gNB signals the allocation to the UE. From the UE perspective, the UE is unaware of whether the LMF or the gNB is making the allocation. The gNB still signals the RRC signaling or DCI signaling.
- The LMF may additionally request the gNB to configure a certain UE to make measurement on a certain gNB (either serving or neighboring) and report the result. The LMF may provide the required configuration for this. The gNB acts as intermediary in this case, forwarding configuration and collecting and reporting the measurements.
- The LMF may coordinate the beam allocation in such slots at each of the gNBs.
- If additional slots are needed to accommodate users for positioning, the LMF is configured to request delegation of additional resources.
   ∘ The LMF may release the positioning slots.
- The gNB may request termination of delegation of radio resources at any time.

According to an embodiment, the LMF requests the network nodes (or gNBs) to delegate scheduling of UEs on those positioning slots to the LMF, and allocates SRS configuration(s) to the UEs.

The previously described embodiments of the solution may be applicable is different scenarios, which are briefly described below. Note however that the embodiments are not restricted to these scenarios.

### 1.4.4) UTDOA

In a UTDOA scenario, the number of network entities (e.g. TRP) that are scheduled to receive uplink positioning signal at the same time is more than 1. Therefore, all cells identified as the neighbors of the TRPs where uplink signal should be received will be set to remain silent on the resource(s) of the uplink positioning signal. All TRPs will transmit the reservation signal on the same reservation resource or reservation resource slot.

### 1.4.5) RTT (Round Trip Time)

For the RTT scenario, at a given time at least one TRP will be active to receive the uplink positioning signal. According to embodiments described earlier, the TRP that expects to receive the uplink positioning signal transmits a downlink positioning reference signal during the reservation indication resource. The cells identified as the neighbors for this/these TRP(s) will be required to listen to the reservation indication resource or reservation resource slot before they can use the REs used for positioning signals.

### 1.4.6) Unlicensed bands

In this scenario, the network entity ( e.g. TMF) would sense the channel and on first sensing the channel unused, would transmit the reservation signal, so that nearby systems would identify the channel as being used.

The periodicity and length of the UL-PRS reservation slot is configured by the LMF, that it is able to
1) Transmit reservation signal on the channel when it senses free, thereby reserving it.
2) Be able to transmit the reservation signal and receive the UL-PRS signal within the time interval stipulated by the rules of the unlicensed band, for example, holding it not more than x ms, for example, 5 ms.

The UE wanting to transmit UL-PRS listens to the reservation slot, and in the following slot transmit a UL-PRS signal. At this time, the TRP associated with the LMU would stop transmitting the reservation indicator and the UEs transmit the UL-PRS signal.

After the UE has finished the UL-PRS transmission, the channel would be released. Other devices would be able to detect inactivity and thereby use the channel.

It should be noted that the concept of sharing uplink reference signal configuration, such as SRS, may also be performed over the X2 interface. Using the configuration and the neighboring relation according to embodiments herein, the gNB may infer used and unused RE in neighboring cells. The gNB may provide a bitmap of usable resources within its grant (in the DCI, for example) and the UE may transmit only on the resources deemed as usable.

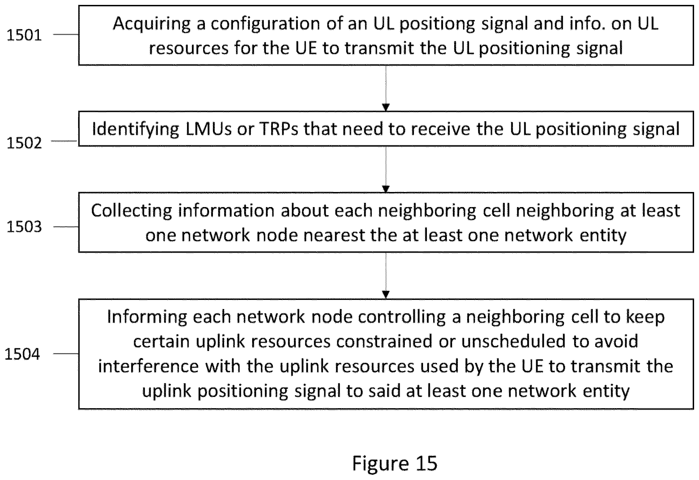

Referring to **Figure 15****,** there is illustrated a flowchart of a method according to some exemplary embodiments herein, for reducing interference caused to positioning signals in a wireless communication system. The method may be performed by a network entity (e.g. a first network entity such as the LMF) as previously described. The main steps comprise:
- (1501) acquiring, from a serving network node (e.g. gNB) serving a UE, a configuration of an uplink positioning signal and information on uplink resources for the UE to transmit the uplink positioning signal;
- (1502) identifying at least one network entity (a second entity such as a LMU or TRP), that need to receive the uplink positioning signal from the UE to be positioned;
- (1503) collecting information about each neighboring cell neighboring at least one network node nearest the at least one network entity; and
- (1504) informing each network node controlling a neighboring cell to keep certain uplink resources constrained or unscheduled to avoid interference with the uplink resources used by the UE to transmit the uplink positioning signal to said at least one network entity.

As previously described, identifying said at least one network entity, that need to receive the uplink positioning signal is performed by using a location of the serving network node or by estimating a location of the UE based on a cell ID.

According to an embodiment, the first entity (LMF) identifies the cells where there should be no PUSCH or SRS transmission on certain resource elements to the positioning link. This information is then communicated to the network nodes (or gNBs) controlling the cells or gNBs identified as neighbors of the TRP(s) used for receiving the positioning signal and requesting the gNB(s) to leave these resources idle.

The neighboring gNBs may take this information into account while scheduling transmissions for avoiding scheduling UEs on the resources or scheduling the UEs that do not cause interference to ongoing positioning signal.

According to an embodiment, the method comprises sending a request to each network node nearest the at least one network entity which receives the uplink signal to provide a list of neighboring cells the request includes at least a EARFCN, an uplink bandwidth and a cyclic prefix corresponding to the uplink positioning signal. According to an embodiment, the method further comprises receiving, from each of the network nodes, a response including at least a physical cell ID, PCI, of each neighboring cell.

As previously described and according to an embodiment, the method comprises: configuring, by the first network entity (e.g. LMF), a reservation resource slot in the downlink which indicates reservation of resources for transmitting the uplink positioning signal and informing the network entities and/or network nodes about the configured reservation resource slot.

The method further comprises: transmitting to at least one network node, an uplink positioning slot configuration request containing at least the configuration of the positioning signal, PCI, and role of the network node, wherein the role is one of a schedule, measure or silent, and receiving the requested configuration and if the configuration collides with another uplink positioning signal measurement configured on a same resource element, providing, by said at least on network node, a dynamical range of the signal by specifying a minimum and maximum signal power a new positioning signal must have for reception.

The method also comprises: creating, by the first network entity (LMF), an uplink positioning slot in the configured slot when the requested uplink positioning slot configuration information received from the network nodes contains a same enumeration.

The method further comprises configuring a mapping between the reservation resource slot and the resource used for the uplink positioning signal, and sending to each network node information about resource blocks and slot index, indicating the starting resource block and a length of the reservation resource slot in number of resources blocks across frequency.

The method further comprises receiving from each network node, a confirmation whether the network node can configure the reservation resource slot.

The method further comprises communicating the configuration of the mapping between the reservation resource slot and the resource used for the uplink positioning signal to the network nodes for enabling said network nodes to make scheduling decisions and for commanding at least one UE to report at least a measured RSRP on said configured reservation resource slot. The reservation resource elements in the reservation resource slot include one or more resource elements for transmitting a pilot signal or a sequence depending on the number of resource elements.

The method further comprises configuring certain slots in an uplink frame to be positioning slots and requesting network nodes to allocate said slots for positioning purposes, and delegating assignment of radio resources to the UEs in said slots to the first network entity (LMF).

The method further comprises requesting the network nodes to delegate scheduling of UEs on those positioning slots to the first network entity, and allocating SRS configuration(s) to the UEs.

The method further comprises requesting delegation of radio resources from network nodes that are either serving network nodes, network nodes associated with a transmission measurement function where positioning measurements are to be performed and from network nodes that cause interference to uplink positioning signal from the UE to be positioned.

The method further comprises receiving from each network node or network entity an interference margin on resources where said network nodes or network entities are configured to receive positioning signals; and wherein the interference margin is a margin, where a lower margin specifies a minimum power a new positioning signal could be received with and a higher margin specifies a maximum power a new positioning signal could be received with.

When at least one UE in a neighboring cell is scheduled by a network node, signaling a bitmap pattern to the at least one UE, in a downlink control channel, wherein the bitmap pattern indicates which resource elements that are unused or free in the neighboring cell and that can be used by the UE to transmit.

According to an embodiment, the method further comprises communicating used Sounding Reference Signal, SRS, configuration(s) to neighboring network nodes, and the neighboring network nodes signaling to UEs scheduled for PUSCH a pattern indicating which resource elements are usable and further informing the length of the pattern in terms of resource blocks.

In order to perform the previously described process or method steps related to the LMF some embodiments herein include a location server that comprises the first network entity (LMF) for reducing interference caused to positioning signals. The server comprises a processor and a memory containing instructions executable by said processor whereby the network entity is operative to perform anyone of the subject-matter of previously described embodiments including the subject-matter according to claims 1-7.

There is also provided a computer program comprising instructions which when executed on at least one processor of the location server, cause the at least said one processor to carry out the method according to anyone claims 1-7.

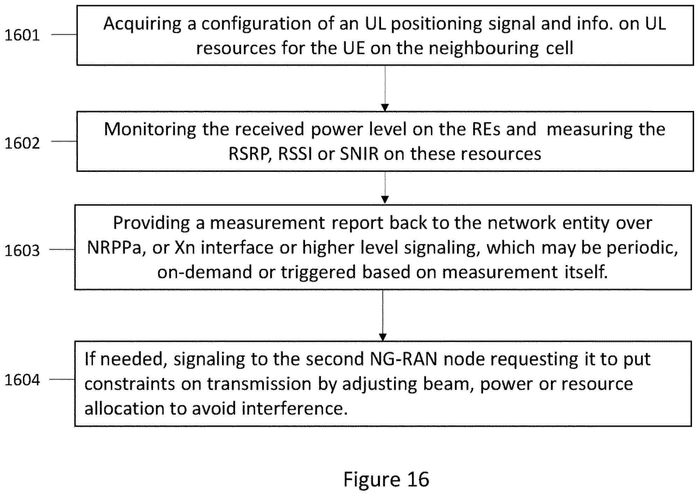

Referring to **Figure 16****,** there is illustrated a flowchart of a method according to some exemplary embodiments herein, for reducing interference caused to positioning signals in a wireless communication system. The method may be performed by a NG-RAN node as previously described. The main steps comprise:
- (1601) acquiring, from a first network node (NG-RAN node) assistance data on the resources scheduled on the same or part of time and frequency positioning uplink resources configuration, from a second network node (NG-RAN node). The first network node may be a serving network node and the second network node may be a neighboring network node or vice versa. The assistance data could include among others: a configuration of an UL positioning signal and information on UL resources, e.g. SRS configuration, power level, beamforming information, PUSCH resource allocation map etc.
- (1602) monitoring the received power level by measuring the RSRP (Received Signal Received Power), RSSI (Received Signal Strength Indication) or SINR (Signal to Interference Noise Ratio) on these resources,
- (1603) providing a measurement report back to the network entity (e.g. the LMF) over NRPPa, or Xn interface or higher level signaling, which may be periodic, on-demand or triggered based on measurement itself. Some example scenarios where the measurement reporting may be triggered by measurement itself could comprise:
   1) when the measurement exceeds a pre-defined threshold,
   2) exceeds a pre-defined threshold but under a second threshold,
   3) exceeds both first and second threshold,
   4) fall below the first threshold again.
- (1604) (if needed) The first network node (NG-RAN node) node may send a signaling to the second network node (NG-RAN node) requesting it to constrain its transmission by adjusting beam, power or resource allocation to avoid interference caused to it, by suitable protocols, for example, the Xn interface. This request may be made by the first NG-RAN node based on the measurements and/or preemptively.

Throughout this disclosure, the word "comprise" or "comprising" has been used in a non-limiting sense, i.e. meaning "consist at least of". Although specific terms may be employed herein, they are used in a generic and descriptive sense only and not for purposes of limitation. The embodiments herein may be applied in any wireless systems including, LTE or 4G, LTE-A (or LTE-Advanced), 5G etc.

### REFERENCES

[1] 3GPP TS 36.111 V14.0.0, "Location Measurement Unit (LMU) performance specification; Network based positioning systems in Evolved Universal Terrestrial Radio Access Network (E-UTRAN)," Release 14, 2017-03.
[2] Birendra Ghimire and Harald Haas and Gunther Auer, "Busy Burst Enabled Coordinated Multipoint Network with Decentralized Control," IEEE, 10, 2011-10.
[3] 3GPP TS 38.331 V15.2.1, 5G;NR; Radio Resource Control (RRC); Protocol specification," Release 15, 2018-06.
[4] 3GPP TS 38.455 V15.2.1, " NG-RAN; NR Positioning Protocol A (NRPPa)," Release 15, 2019-01.
[5] 3GPP TS 36.355 V15.3.0, " Evolved Universal Terrestrial Radio Access (E-UTRA); LTE Positioning Protocol (LPP)," Release 15, 2019-03.
[6] 3GPP TS 36.455 V15.2.1, " Evolved Universal Terrestrial Radio Access (E-UTRA); LTE Positioning Protocol (LPP)," Release 15, 2019-01.
[7] 3GPP TS 36.305 V15.1.0, "Stage 2 functional specification of User Equipment (UE) positioning in E-UTRAN," Release 15, 2018-09.

## Claims

1. A method performed by a first network entity acting as a location measurement or management function, for reducing interference caused to or by positioning signals in a wireless communication system, the method comprising:
- acquiring (1501), from a serving network node serving a user equipment, UE, a configuration of an uplink positioning signal and information on uplink resources for the UE to transmit the uplink positioning signal;
- identifying (1502) at least one network entity, that need to receive the uplink positioning signal from the UE to be positioned;
- collecting (1503) information about each neighboring cell neighboring at least one network node nearest the at least one network entity; and
- informing (1504) each network node controlling a neighboring cell to keep certain uplink resources constrained or unscheduled to avoid interference with the uplink resources used by the UE to transmit the uplink positioning signal to said at least one network entity; and
- configuring a reservation resource or a reservation resource slot in the downlink, which indicates reservation of resources for transmitting said uplink positioning signal and informing the at least one network entity and each network node of each neighboring cell about the configured reservation resource slot or reservation resource.

2. The method according to claim 1 further comprising: configuring a mapping between the reservation resource slot and the resource used for the uplink positioning signal.

3. The method according to claim 2 comprising: sending to each network node information about resource blocks and slot index, indicating the starting resource block and a length of the reservation resource slot in number of resources blocks across frequency.

4. The method according to claim 2 comprising: communicating the configuration of the mapping between the reservation resource or reservation resource slot and the resource used for the uplink positioning signal to the network nodes for enabling said network nodes to make scheduling decisions and for commanding at least one UE to report at least a measured RSRP on said configured reservation resource or reservation resource slot.

5. The method according to claim 4 wherein reservation resource elements in the reservation resource slot include one or more resource elements for transmitting a pilot signal or a sequence depending on the number of resource elements.

6. The method according to any one of the preceding claims comprising, sensing a channel and when the channel is unused, transmitting a reservation signal; and configuring a periodicity of the reservation resource; and receiving an uplink positioning reference signal within a time interval.

7. The method according to any one of the preceding claims wherein the reservation resource or the reservation resource slot carry at least one downlink reference signal.

8. A location server comprising a network entity, wherein the server comprises a processor and a memory containing instructions executable by said processor whereby the network entity is operative to perform any of claims 1-7.

9. A method performed by a user equipment, UE, for reducing interference caused to or by positioning signals in a wireless communication system, the method comprising:
- receiving a configuration on a reservation resource or a reservation resource slot in the downlink, which indicates reservation of resources for transmitting said uplink positioning signal; and
- making measurements on the reservation resource or the reservation resource slot; and
- conveying the result of the measurement on resource blocks where the UE has been commanded to measure, or
- based on Reference Signal Received Power, RSRP, measurement on the reservation signal or the reservation resource slot, either avoiding transmitting on resources for uplink positioning signal or transmitting with reduced power so as to limit interference to the positioning signal.

10. The method according to claim 9 comprising if the UE decides to transmit an uplink positioning reference signal or data, the UE listens to the reservation slot or reservation resource, and in the following resources mapped to the reservation resource(s), transmits the uplink positioning reference signal or PUSCH or data or any reference signal.

11. A user equipment, UE, comprising a processor and a memory containing instructions executable by said processor whereby the UE is operative to perform any of claims 9-10.

12. A method performed by a network node, for reducing interference caused to or by positioning signals in a wireless communication system, the method comprising:
- providing, a network entity acting as a location measurement or management function, with information about each neighboring cell neighboring the network node nearest at least one network entity;
- acquiring, from the location measurement or management function, information to keep certain uplink resources constrained or unscheduled to avoid interference with uplink resources used by a user equipment, UE, to transmit an uplink positioning signal to said at least one network entity; and
- acquiring, from the location measurement or measurement function, information about a configured reservation slot or a reservation resource indicating reservation of resources for transmitting said uplink positioning signal.

13. The method according to claim 12 comprising receiving, from the location measurement or management function, information about resource blocks and slot index, indicating the starting resource block and a length of the reservation resource slot in number of resources blocks across frequency.

14. The method according to claim 12 or claim 13 comprising, receiving from the location measurement or management function, a configuration of a mapping between the reservation resource or reservation resource slot and the resource used for the uplink positioning signal for enabling said network node to make a scheduling decision and for commanding at least one UE to:
- either report at least a measured Reference Signal Received Power, RSRP, on said configured reservation resource or reservation resource slot, or
- based on RSRP measurement on the reservation signal or the reservation resource slot, either avoiding transmitting on resources for uplink positioning signal or transmitting with reduced power so as to limit interference to the positioning signal

15. A network node comprising a processor and a memory containing instructions executable by said processor whereby the network node is operative to perform any of claims 12-14.

## Patentansprüche

1. Verfahren, das von einer ersten Netzeinheit durchgeführt wird, die als Standortmessungs- oder Verwaltungsfunktion fungiert, um Interferenzen zu reduzieren, die von oder durch Positionssignale in einem drahtlosen Kommunikationssystem verursacht werden, wobei das Verfahren Folgendes umfasst:
- Erfassen (1501) einer Konfiguration eines Uplink-Positionssignals und von Informationen über Uplink-Ressourcen für das Benutzergerät (UE) zur Übertragung des Uplink-Positionssignals von einem bedienenden Netzknoten, der ein Benutzergerät (UE) bedient;
- Identifizieren (1502) mindestens einer Netzeinheit, die das Uplink-Positionssignal von dem zu positionierenden UE empfangen muss;
- Sammeln (1503) von Informationen über jede benachbarte Zelle, die an mindestens einen Netzknoten angrenzt, der der mindestens einen Netzeinheit am nächsten ist; und
- Informieren (1504) jedes Netzknotens, der eine benachbarte Zelle steuert, um bestimmte Uplink-Ressourcen eingeschränkt oder außerplanmäßig zu halten, um eine Interferenz der Uplink-Ressourcen zu vermeiden, die von dem UE verwendet werden, um das Uplink-Positionssignal an die mindestens eine Netzeinheit zu übertragen; und
- Konfigurieren einer Reservierungsressource oder eines Reservierungsressourcen-Slots in dem Downlink, was eine Reservierung von Ressourcen für die Übertragung des Uplink-Positionssignals angibt und Informieren der mindestens eine Netzeinheit und jedes Netzknotens jeder benachbarten Zelle über den konfigurierten Reservierungsressourcen-Slot oder die Reservierungsressource.

2. Verfahren nach Anspruch 1, ferner umfassend: Konfigurieren einer Abbildung zwischen dem Reservierungsressourcen-Slot und der für das Uplink-Positionssignal verwendeten Ressource.

3. Verfahren nach Anspruch 2, Folgendes umfassend: Senden von Informationen über Ressourcenblöcke und Slot-Index an jeden Netzknoten, wobei der Anfangsressourcenblock und eine Länge des Reservierungsressourcen-Slots in der Anzahl von Ressourcenblöcken über die Frequenz angegeben werden.

4. Verfahren nach Anspruch 2, Folgendes umfassend: Übermitteln der Konfiguration der Abbildung zwischen der Reservierungsressource oder dem Reservierungsressourcen-Slot und der für das Uplink-Positionssignal verwendeten Ressource an die Netzknoten, um die Netzknoten in die Lage zu versetzen, Planungsentscheidungen zu treffen, und um mindestens ein UE anzuweisen, mindestens einen gemessenen RSRP über die konfigurierte Reservierungsressource oder den Reservierungsressourcen-Slot zu melden.

5. Verfahren nach Anspruch 4, wobei die Reservierungsressourcenelemente in dem Reservierungsressourcen-Slot ein oder mehrere Ressourcenelemente zur Übertragung eines Pilotsignals oder einer Sequenz in Abhängigkeit von der Anzahl der Ressourcenelemente beinhalten.

6. Verfahren nach einem der vorhergehenden Ansprüche, Folgendes umfassend: Erfassen eines Kanals und, wenn der Kanal nicht verwendet wird, Senden eines Reservierungssignals; und Konfigurieren einer Periodizität der Reservierungsressource; und Empfangen eines Uplink-Positionsreferenzsignals innerhalb eines Zeitintervalls.

7. Verfahren nach einem der vorhergehenden Ansprüche, wobei die Reservierungsressource oder der Reservierungsressourcen-Slot mindestens ein Downlink-Referenzsignal tragen.

8. Standortserver, umfassend eine Netzeinheit, wobei der Server einen Prozessor und einen Speicher umfasst, der Anweisungen enthält, die von dem Prozessor ausführbar sind, wodurch die Netzeinheit in der Lage ist, das Verfahren nach einem der Ansprüche 1-7 durchzuführen.

9. Verfahren, das von einem Benutzergerät (UE) zum Reduzieren einer Interferenz durchgeführt wird, die von oder durch Positionssignale in einem drahtlosen Kommunikationssystem verursacht werden, wobei das Verfahren Folgendes umfasst:
- Empfangen einer Konfiguration auf einer Reservierungsressource oder einem Reservierungsressourcen-Slot in dem Downlink, die eine Reservierung von Ressourcen zum Übertragen des Uplink-Positionssignals anzeigt; und
- Vornehmen von Messungen an der Reservierungsressource oder dem Reservierungsressourcen-Slot; und
- Übermitteln des Ergebnisses der Messung an Ressourcenblöcke, bei denen das UE den Befehl zur Messung erhalten hat, oder
- auf Grundlage der Messung des Referenzsignals der Empfangsleistung (RSRP) auf dem Reservierungssignal oder dem Reservierungsressourcen-Slot entweder Vermeiden des Übertragens auf den Ressourcen für das Uplink-Positionssignal oder Übertragen mit reduzierter Leistung, um eine Interferenz des Positionssignals zu begrenzen.

10. Verfahren nach Anspruch 9, bei dem das UE, wenn es sich entscheidet, ein Uplink-Positionsreferenzsignal oder Daten zu senden, den Reservierungs-Slot oder die Reservierungsressource abhört und in den folgenden Ressourcen, die auf der/den Reservierungsressource/n abgebildet sind, das Uplink-Positionsreferenzsignal oder PUSCH oder Daten oder ein beliebiges Referenzsignal überträgt.

11. Benutzergerät (UE), das einen Prozessor und einen Speicher umfasst, wobei der Speicher Anweisungen enthält, die durch den Prozessor ausführbar sind, wodurch das Benutzergerät in der Lage ist, das Verfahren nach einem der Ansprüche 9-10 durchzuführen.

12. Verfahren, das von einem Netzknoten zum Reduzieren einer Interferenz durchgeführt wird, die von oder durch Positionssignale in einem drahtlosen Kommunikationssystem verursacht wird, wobei das Verfahren Folgendes umfasst:
- Bereitstellen einer Netzeinheit, die als Standortmessungs- oder Verwaltungsfunktion fungiert, mit Informationen über jede benachbarte Zelle, die dem Netzknoten am nächsten ist, der mindestens einer Netzeinheit entspricht;
- Erfassen von Informationen aus der Standortmessungs- oder Verwaltungsfunktion, um bestimmte Uplink-Ressourcen eingeschränkt oder außerplanmäßig zu halten, um eine Interferenz von Uplink-Ressourcen zu vermeiden, die von einem Benutzergerät (UE) zum Übertragen eines Uplink-Positionssignals an die mindestens eine Netzeinheit verwendet werden; und
- Erfassen von Informationen über einen konfigurierten Reservierungs-Slot oder eine Reservierungsressource, die eine Reservierung von Ressourcen zum Übertragen des Uplink-Positionssignals angibt, von der Standortmessungs- oder Messfunktion.

13. Verfahren nach Anspruch 12, umfassend das Empfangen, von Informationen über Ressourcenblöcke und Slot-Index von der Standortmessungs- oder Verwaltungsfunktion, die den Anfangsressourcenblock und eine Länge des Reservierungsressourcen-Slots in der Anzahl von Ressourcenblöcken über eine Frequenz angeben.

14. Verfahren nach Anspruch 12 oder Anspruch 13, umfassend das Empfangen einer Konfiguration einer Abbildung zwischen der Reservierungsressource oder dem Reservierungsressourcen-Slot und der für das Uplink-Positionssignal verwendeten Ressource von der Standortmessungs- oder Verwaltungsfunktion, um den Netzknoten in die Lage zu versetzen, eine Planungsentscheidung zu treffen und mindestens einen UE mit Folgendem anzuweisen:
- entweder mindestens ein gemessenes Referenzsignal der Empfangsleistung (RSRP) auf der konfigurierten Reservierungsressource oder dem Reservierungsressourcen-Slot zu melden, oder
- auf Grundlage der RSRP-Messung des Reservierungssignals oder des Reservierungsressourcen-Slots entweder die Übertragung auf Ressourcen für das Uplink-Positionssignal zu vermeiden oder mit reduzierter Leistung zu übertragen, um eine Interferenz mit dem Positionssignal zu begrenzen.

15. Netzknoten, der einen Prozessor und einen Speicher umfasst, wobei der Speicher Anweisungen enthält, die durch den Prozessor ausführbar sind, wodurch der Netzknoten in der Lage ist, das Verfahren nach einem der Ansprüche 12-14 durchzuführen.

## Revendications

1. Procédé réalisé par une première entité de réseau agissant comme fonction de mesure ou de gestion de localisation, pour réduire les interférences causées à ou par des signaux de positionnement dans un système de communication sans fil, le procédé comprenant :
- l'acquisition (1501), à partir d'un noeud de réseau de desserte desservant un équipement utilisateur, UE, d'une configuration d'un signal de positionnement de liaison montante et d'informations sur des ressources de liaison montante pour que l'UE transmette le signal de positionnement de liaison montante ;
- l'identification (1502) d'au moins une entité de réseau, qui doit recevoir le signal de positionnement de liaison montante de l'UE à positionner ;
- la collecte (1503) d'informations sur chaque cellule voisine avoisinant au moins un noeud de réseau le plus proche de l'au moins une entité de réseau ; et
- le fait d'informer (1504) chaque noeud de réseau commandant à une cellule voisine de maintenir certaines ressources de liaison montante restreintes ou non planifiées pour éviter toute interférence avec les ressources de liaison montante utilisées par l'UE pour transmettre le signal de positionnement de liaison montante à ladite au moins une entité de réseau ; et
- la configuration d'une ressource de réservation ou d'un emplacement de ressource de réservation dans la liaison descendante, qui indique la réservation de ressources pour transmettre ledit signal de positionnement de liaison montante et le fait d'informer l'au moins une entité de réseau et chaque noeud de réseau de chaque cellule voisine de l'emplacement de ressource de réservation configuré ou de la ressource de réservation configurée.

2. Procédé selon la revendication 1 comprenant également : la configuration d'un mappage entre l'emplacement de ressource de réservation et la ressource utilisée pour le signal de positionnement de liaison montante.

3. Procédé selon la revendication 2 comprenant : l'envoi, à chaque noeud de réseau, d'informations sur les blocs de ressources et l'index d'emplacement, indiquant le bloc de ressources de départ et une longueur de l'emplacement de ressource de réservation en nombre de blocs de ressources sur la fréquence.

4. Procédé selon la revendication 2 comprenant : la communication de la configuration du mappage entre la ressource de réservation ou l'emplacement de ressource de réservation et la ressource utilisée pour le signal de positionnement de liaison montante aux noeuds de réseau pour permettre auxdits noeuds de réseau de prendre des décisions de planification et pour commander à au moins un UE de signaler au moins une RSRP mesurée sur ladite ressource de réservation configurée ou ledit emplacement de ressource de réservation configuré.

5. Procédé selon la revendication 4, dans lequel les éléments de ressources de réservation dans l'emplacement de ressource de réservation comportent un ou plusieurs éléments de ressources pour transmettre un signal pilote ou une séquence en fonction du nombre d'éléments de ressources.

6. Procédé selon l'une quelconque des revendications précédentes, comprenant la détection d'un canal et, lorsque le canal n'est pas utilisé, la transmission d'un signal de réservation ; et la configuration d'une périodicité de la ressource de réservation ; et la réception d'un signal de référence de positionnement de liaison montante dans un intervalle de temps.

7. Procédé selon l'une quelconque des revendications précédentes, dans lequel la ressource de réservation ou l'emplacement de ressource de réservation transporte au moins un signal de référence de liaison descendante.

8. Serveur de localisation comprenant une entité de réseau, dans lequel le serveur comprend un processeur et une mémoire contenant des instructions exécutables par ledit processeur, moyennant quoi l'entité de réseau fonctionne pour réaliser l'une quelconque des revendications 1 à 7.

9. Procédé réalisé par un équipement utilisateur, UE, pour réduire les interférences causées à ou par des signaux de positionnement dans un système de communication sans fil, le procédé comprenant :
- la réception d'une configuration sur une ressource de réservation ou un emplacement de ressource de réservation dans la liaison descendante, qui indique la réservation de ressources pour transmettre ledit signal de positionnement de liaison montante ; et
- la réalisation de mesures sur la ressource de réservation ou sur l'emplacement de ressource de réservation ; et
- la transmission du résultat de la mesure sur les blocs de ressources où l'UE a reçu l'ordre de mesurer, ou
- sur la base de la mesure de la puissance reçue du signal de référence, RSRP, sur le signal de réservation ou sur l'emplacement de ressource de réservation, soit en évitant de transmettre sur des ressources pour le signal de positionnement de liaison montante, soit en transmettant avec une puissance réduite afin de limiter les interférences avec le signal de positionnement.

10. Procédé selon la revendication 9 comprenant que si l'UE décide de transmettre un signal de référence de positionnement de liaison montante ou des données, l'UE écoute l'emplacement de réservation ou la ressource de réservation, et dans les ressources suivantes mappées à la ou aux ressources de réservation, transmet le signal de référence de positionnement de liaison montante ou le PUSCH ou les données ou tout signal de référence.

11. Équipement utilisateur, UE, comprenant un processeur et une mémoire contenant des instructions exécutables par ledit processeur, moyennant quoi l'UE fonctionne pour réaliser l'une quelconque des revendications 9 à 10.

12. Procédé réalisé par un noeud de réseau, pour réduire les interférences causées à ou par des signaux de positionnement dans un système de communication sans fil, le procédé comprenant :
- la fourniture, à une entité de réseau agissant comme une fonction de mesure ou de gestion de localisation, d'informations sur chaque cellule voisine avoisinant le noeud de réseau le plus proche d'au moins une entité de réseau ;
- l'acquisition, à partir de la fonction de mesure ou de gestion de localisation, d'informations pour maintenir certaines ressources de liaison montante restreintes ou non planifiées afin d'éviter toute interférence avec les ressources de liaison montante utilisées par un équipement utilisateur, UE, pour transmettre un signal de positionnement de liaison montante à ladite au moins une entité de réseau ; et
- l'acquisition, à partir de la fonction de mesure ou de gestion de localisation, d'informations sur un emplacement de réservation configuré ou une ressource de réservation configurée indiquant la réservation de ressources pour transmettre ledit signal de positionnement de liaison montante.

13. Procédé selon la revendication 12 comprenant la réception, à partir de la fonction de mesure ou de gestion de localisation, d'informations sur des blocs de ressources et un index d'emplacement, indiquant le bloc de ressources de départ et une longueur de l'emplacement de ressource de réservation en nombre de blocs de ressources sur la fréquence.

14. Procédé selon la revendication 12 ou la revendication 13, comprenant, la réception, à partir de la fonction de mesure ou de gestion de localisation, d'une configuration d'un mappage entre la ressource de réservation ou l'emplacement de ressource de réservation et la ressource utilisée pour le signal de positionnement de liaison montante pour permettre audit noeud de réseau de prendre une décision de planification et pour commander à au moins un UE de :
- soit signaler au moins une puissance reçue du signal de référence, RSRP, mesurée sur ladite ressource de réservation configurée ou sur ledit emplacement de ressource de réservation configurée, ou
- sur la base de la mesure RSRP sur le signal de réservation ou sur l'emplacement de ressource de réservation, soit en évitant de transmettre sur des ressources pour le signal de positionnement de liaison montante, soit en transmettant avec une puissance réduite afin de limiter les interférences avec le signal de positionnement.

15. Noeud de réseau comprenant un processeur et une mémoire contenant des instructions exécutables par ledit processeur, moyennant quoi le noeud de réseau fonctionne pour réaliser l'une quelconque des revendications 12 à 14.
